(19) Europäisches Patentamt
European Patent Office
Office européen des brevets

(11) Veröffentlichungsnummer: **0 431 542 A2**

# (12) EUROPÄISCHE PATENTANMELDUNG

(21) Anmeldenummer: **90123153.0**

(22) Anmeldetag: **04.12.90**

(51) Int. Cl.5: **C08J 9/08**, C08J 9/14, C08L 75/04

(30) Priorität: **07.12.89 DE 3940447**
**14.03.90 DE 4008041**

(43) Veröffentlichungstag der Anmeldung:
**12.06.91 Patentblatt 91/24**

(84) Benannte Vertragsstaaten:
**AT BE CH DE DK ES FR GB GR IT LI LU NL SE**

(71) Anmelder: **HOECHST AKTIENGESELLSCHAFT**
**Postfach 80 03 20**
**W-6230 Frankfurt am Main 80(DE)**

(72) Erfinder: **Behme, Klaus-Jürgen**
**Kurmainzerstrasse 25**
**W-6239 Eppstein/Taunus(DE)**
Erfinder: **Deger, Hans-Matthias, Dr.**
**Am Rheingauer Weg 8**
**W-6238 Hofheim am Taunus(DE)**

## (54) Verfahren zur Herstellung von Schaumstoffen.

(57) Die Erfindung betrifft ein Verfahren zur Herstellung von Schaumstoffen auf Basis von Polyisocyanaten durch Umsetzung von Polyisocyanaten, Verbindungen mit mindestens zwei gegenüber Isocyanatgruppen reaktionsfähigen Wasserstoffatomen, Treibmitteln und gegebenenfalls weiteren Zusatzmitteln. Dabei wird ein Treibmittel verwendet, das zu mindestens 10 Mol-% aus einem oder mehreren fluorierten Ethern der allgemeinen Formel I

$$C_aH_bF_c - O - C_dH_eF_f \quad \text{mit}$$

| | |
|---|---|
| a = 1-6 | d = 1-2 |
| b = 1-12 | e = 0-5 |
| c = 1-12 | f = 0-5 |

besteht.

EP 0 431 542 A2

## VERFAHREN ZUR HERSTELLUNG VON SCHAUMSTOFFEN

Die Erfindung betrifft ein Verfahren zur Herstellung von Schaumstoffen auf Basis von Polyisocyanaten, insbesondere von Polyurethan- und Polyisocyanuratschaumstoffen. Die Herstellung solcher Schaumstoffe ist bekannt und beispielsweise im Kunststoff-Handbuch, Band VII, Polyurethane, Carl Hanser Verlag München, Wien (1983), Seiten 246 bis 331, sowie in EP-A1-O 077 964, EP-A1-O 334 059, DE-AS 1 694 138 (= GB-PS 1 209 243) beschrieben.

In Ullmanns Enzyklopädie der technischen Chemie (1980), Band 19, Seiten 301 bis 341, sind die verwendbaren Rohstoffe und die möglichen Verfahren zur Herstellung von Polyurethanhartschaumstoffen zusammenfassend beschrieben.

Des weiteren sind entsprechende Hinweise in Kirk-Othmer, Encycl. of Chem. Technology, 3rd edition, Vol. 11 (1980), Pages 87-89 und Vol. 23 (1983), Pages 576-607 zu finden.

Übliche Treibmittel für Polyurethane sind Kohlendioxid - das bei der Herstellung der Polyurethane aus Polyisocyanaten und Verbindungen mit reaktivem Wasserstoff durch Zusatz von Wasser erzeugt wird - und/oder sogenannte "physikalische Treibmittel", namlich leicht flüchtige organische Substanzen, wie Aceton, Ethylacetat, halogensubstituierte Alkane wie Methylenchlorid, Chloroform, Ethylidenchlorid, Vinylidenchlorid, Dichlordifluormethan, ferner Butan, Hexan, Heptan oder Diethylether. Die Verwendbarkeit fluorierter Kohlenwasserstoffe zur Herstellung von wärmeisolierenden Polyurethanschaumstoffen ist z.B. aus der DE-PS 1 111 381 bekannt. Auch anorganische Treibmittel, z.B. Luft, $CO_2$ oder $N_2O$, kommen infrage. Weitere Einzelheiten über die Verwendung von Treibmitteln sind im Kunststoff-Handbuch, Band VII, Carl-Hanser-Verlag, München (1966), z.B. auf den Seiten 108 und 109, 453 bis 455 und 507 bis 510 beschrieben.

An physikalische Treibmittel für Polyurethanschaumstoffe werden bestimmte Anforderungen gestellt. Es ist eine gute Vermischbarkeit der Treibmittel mit den üblichen Rohstoffen erforderlich, sie sollen aber im entstehenden Polyurethan unlöslich sein, um eine gute Materialqualität der Schaumstoffe zu gewährleisten. Des weiteren wird wegen der bei der Verschäumung auftretenden Reaktionswärme, die zu einer Temperaturerhöhung bis etwa 200 °C bei der Aufschäumung großvolumiger Teile führen kann, eine gute thermische Stabilität des Treibmittels erwartet. Außerdem sollten die Treibmittel vorzugsweise unbrennbar sein. Alle diese Anforderungen führten im Lauf der Entwicklung der Polyurethanschaum-Technologie dazu, fluorierte Chlorkohlenwasserstoffe (FCKW), insbesondere Trichlorfluormethan (FCKW 11), als physikalische Treibmittel zu verwenden.

Die FCKW stehen jedoch inzwischen im Verdacht, die Ozonhülle der Erde zu schädigen. Es ist deshalb notwendig, auf die Verwendung dieser Verbindungen baldmöglichst zu verzichten und stattdessen andere Substanzen, die kein Ozon-Schädigungspotential haben, als physikalische Treibmittel zu verwenden.

Diskutiert wird der Verzicht auf FCKW als Treibmittel zugunsten von $CO_2$, das - wie oben erwähnt - durch Zusatz von Wasser bei der Herstellung der Polyurethane aus Polyisocyanaten entsteht. Diese Methode ist zwar für manche Schaumstoffe vertretbar, führt aber insbesondere bei Hartschaumstoffen zu großen Nachteilen, weil die so hergestellten Schaumstoffe eine erhöhte Wärmeleitfähigkeit und damit ein geringeres Wärmedämmvermögen aufweisen als die mit Hilfe von FCKW hergestellten Schaumstoffe.

Überraschenderweise wurde nun gefunden, daß fluorierte Ether in gleicher Weise wie FCKW zur Aufschäumung von Schaumstoffen auf Basis von Polyisocyanaten geeignet sind und die Wärmeleitfähigkeit der mit ihnen geschäumten Hartschaumstoffe wesentlich niedriger ist als die Wärmeleitfähigkeit der mit $CO_2$ geschäumten. Insbesondere wurde gefunden, daß man diese fluorierten Ether und $CO_2$ gleichzeitig als Treibmittel benutzen kann, wobei schon bei relativ geringem Anteil an fluorierten Ethern (und entsprechend hohem $CO_2$-Anteil und daher hohem Wasseranteil in der Hartschaum-Rezeptur) eine erhebliche Verbesserung der Wärmedämmwirkung erreicht wird.

Gegenstand der Erfindung ist ein Verfahren zur Herstellung von Schaumstoffen auf Basis von Polyisocyanaten durch Umsetzung von Polyisocyanaten, Verbindungen mit mindestens zwei gegenüber Isocyanatgruppen reaktionsfähigen Wasserstoffatomen, Treibmitteln und gegebenenfalls weiteren Zusatzmitteln, dadurch gekennzeichnet, daß man ein Treibmittel verwendet, das zu mindestens 10 Mol-% aus einem oder mehreren fluorierten Ethern der allgemeinen Formel I

$$C_aH_bF_c - O - C_dH_eF_f \qquad \text{mit}$$

| | |
|---|---|
| a = 1-6 | d = 1-2 |
| b = 1-12 | e = 0-5 |
| c = 1-12 | f = 0-5 |

besteht.

Vorzugsweise bestehen mindestens 20 Mol-%, insbesondere 50-80 Mol-% des Treibmittels aus einem oder mehreren der genannten fluorierten Ether. Das Treibmittel kann jedoch im Prinzip auch zu 100 Mol-% aus diesen Ethern bestehen. Wenn jedoch - was im allgemeinen der Fall sein wird - nicht das gesamte Treibmittel aus diesen Ethern besteht, dann besteht der Rest aus einem der obengenannten konventionellen Treibgase. Vorzugsweise besteht der Rest dann zumindest teilweise aus $CO_2$, welches durch Zusatz einer geeigneten Menge an Wasser bei der Umsetzung der Polyisocyanate zu den Schaumstoffen erzeugt wird. Eine "geeignete" Menge Wasser ist dabei eine Menge, die den gewünschten Anteil an $CO_2$ erzeugt. Besonders bevorzugt ist ein Treibgas, das nur aus einem oder mehreren der genannten Ether und (durch Wasserzugabe erzeugtem) $CO_2$ besteht, d.h. daß der oben angesprcchene "Rest" des Treibgases nur aus $CO_2$ besteht.

Unter den fluorierten Ethern der Formel I sind diejenigen bevorzugt, für die

| | |
|---|---|
| a = 1-5 | d = 1-2 |
| b = 1-6 | e = 1-3 |
| c = 5-10 | f = 2-4 |

ist. Besonders bevorzugt sind diejenigen, für die

| | |
|---|---|
| a = 1-3 | d = 1-2 |
| b = 1-4 | e = 1-3 |
| c = 1-6 | f = 2-4 |

ist.

Die Herstellung der fluorierten Ether wird beschrieben in Ullmann's Encyclopedia of Industrial Chemistry ,Volume A 11 (1988), Seite 349-389, insbesondere Seite 367; A. M. Lovelace et al., Aliphatic Fluorine Compounds (1958); H. Liebig und K. Ulm, Herstellung und Anwendung aliphatischer Fluorverbindungen II., Chemiker-Zeitung (1976), S. 3-13.

Ein weiterer Gegenstand der Erfindung sind Schaumstoffe auf Basis von Polyisocyanaten, die nach dem obigen Verfahren erhältlich sind.

Bei Verwendung der genannten fluorierten Ether kann man die bisher üblichen Schaumrohstoffe einsetzen und, wie oben gesagt, Die Anteile an Wasser oder konventionellem physikalischem Treibmittel weitgehend reduzieren oder sogar ganz auf sie verzichten.

Geeignete Polyisocyanate für das erfindungsgemäße Verfahren sind die für diesen Zweck üblichen aliphatischen, cycloaliphatischen und aromatischen Di- oder Polyisocyanate. Bevorzugt sind 2,4- und 2,6-Toluyldiisocyanat, Diphenylmethandiisocyanat, Polymethylenpolyphenylisocyanat und Mischungen davon. Es können auch Carbodiimidgruppen, Urethangruppen, Allophanatgruppen, Isocyanuratgruppen, Harnstoffgruppen oder Biuretgruppen enthaltende Polyisocyanate, die man als "modifizierte Polyisocyanate" und "Isocyanat-Präpolymere" bezeichnet, verwendet werden.

Die Polyisocyanate werden mit Verbindungen umgesetzt, die mindestens zwei gegenüber Isocyanatgruppen reaktionsfähige Wasserstoffatome enthalten, beispielsweise Hydroxylgruppen aufweisende Verbindungen auf Polyether-, Polyester- und Aminbasis, sowie Amino- und/oder Carboxyl- und/oder Thiolgruppen aufweisende Verbindungen. Diese Verbindungen haben in der Regel 2-8 gegenüber Isocyanaten reaktionsfähige Wasserstoffatome.

Als Katalysatoren bei dieser Umsetzung werden, wie üblich, tertiäre Amine, die ggf. auch gegenüber Isocyanatgruppen aktive Wasserstoffatome enthalten können und/oder organische Metallverbindungen, vorzugsweise Zinnsalze von Carbonsäuren eingesetzt.

Außerdem mitverwendet werden im allgemeinen oberflächenaktive Zusatzstoffe, wie Emulgatoren und Schaumstabilisatoren. Bei den Emulgatoren handelt es sich z.B. um Salze von Fettsäuren. Als Schaumstabilisatoren kommen oft Polyethersiloxane zum Einsatz.

Die nachfolgenden Beispiele 1-7 erläutern die Erfindung. Sie betreffen typische Hartschaum-Rezepturen mit unterschiedlichen Anteilen verschiedener fluorierter Ether. Im Vergleichsbeispiel wird dagegen ausschließlich aus Wasser entstandenes $CO_2$ als Treibmittel verwendet. Es zeigt sich bei Mitverwendung der erfindungsgemäßen fluorierten Ether neben $CO_2$ schon bei relativ geringen Ether-Anteilen von z.B. 25 Mol-%, bezogen auf die gesamte Treibmittel-Menge, eine deutliche Verringerung der Wärmeleitfähigkeit der Schaumstoffe. Dieser Effekt nimmt mit längerer Lagerzeit sogar noch zu.

Die fluorierten Ether eignen sich auch zur Aufschäumung von weichen Schaumstoffen mit offenzelliger Struktur und zur Herstellung von Schaumstoff-Formteilen mit zelligem Kern und kompakter Oberfläche gemäß DE-AS 1 694 138 (entsprechend GB-PS 1209 243).

Die Eigenschaften der in den folgenden Beispielen hergestellten Schaumstoffe sind in der ihnen folgenden Tabelle angegeben.

Vergleichsbeispiel
(Verwendung von $CO_2$ als alleiniges Treibmittel)

85 g Sucrose/Propylenoxid-Polyether der OH-Zahl 380, 15 g Ethylendiamin/Propylenoxid-Pclyether der OH-Zahl 480, 1 g Schaumstabilisator (Typ DG 193 von Dow Corning Corp.), 1,5 g Dimethylcyclohexylamin und 3,8 g Wasser wurden mittels eines Rührers mit 2500 Umdrehungen 15 Sekunden lang innig vermischt, dann mit 192 g rohem Diphenylmethandiisocyanat (MDI handelsüblicher Qualität) 10 Sekunden innig vermischt und anschließend in eine Papierform gegossen. Die Aufschäumung des Gemisches begann nach ca. 15 Sekunden und war nach ca. 75 Sekunden beendet. Es resultierte ein harter Schaumstoff mit den in der Tabelle angegebenen Eigenschaften.

Beispiel 1

Es wurde verfahren wie im Vergleichsbeispiel, jedoch mit dem Unterschied, daß 2,0 g Dimethylcyclohexylamin, 2,0 g Wasser, 15 g 1-Hydro-tetrafluorethyl-methylether ($CHF_2$-$CF_2$-O-$CH_3$) und 165 g MDI verwendet wurden.

Beispiel 2

Es wurde verfahren wie in Beispiel 1, aber der Wasser-Anteil auf 3,0 g und der MDI-Anteil auf 180 g erhöht und die 15 g 1-Hydrotetrafluorethyl-methylether durch 10 g 2-Hydrohexafluorpropyl-methylether ($CF_3$-CHF-$CF_2$-O-$CH_3$) ersetzt.

Beispiel 3

Es wurde verfahren wie in Beispiel 2, aber der Wasser-Anteil auf 3,4 g und der MDI-Anteil auf 186 g erhöht. Statt 2-Hydrohexafluorpopyl-methylether wurden 4,5 g 1-Hydrotetrafluorethyl-ethylether ($CHF_2$-$CF_2$-O-$CH_2$-$CH_3$) verwendet.

Beispiel 4

15 g Glycerin/Ethylenoxid-Polyether der OH-Zahl 750, 50 g Sucrose/Propylenoxid-Polyether der OH-Zahl 490, 15 g Ethylendiamin/Propylenoxid-Polyether der OH-Zahl 480, 20g Tetrabromphthalat-Diol der OH-Zahl 220 (PHT-4-Diol von Great Lakes Chemical), 20 g Trichlorethylphosphat, 1 g Schaumstabilisator, 1,5 g Dimethylcyclohexylamin, 1 g Wasser, 28 g 1-Hydro-tetrafluorethyl-methylether ($CHF_2$-$CF_2$-O-$CH_3$) und 147 g MDI wurden wie im Vergleichsbeispiel verschäumt.

Beispiel 5

Es wurde verfahren wie in Beispiel 4, jedoch wurden statt 15 g nur 10 g Glycerin/Ethylenoxid-Polyether der OH-Zahl 750, sowie 55 g Sorbitol/Glycerin/Propylenoxid-Polyether der OH-Zahl 560 statt 50 g Sucrose/Propylenoxid-Polyether der OH-Zahl 490 verwendet und das Treibmittel 1-Hydrotetrafluorethylmethylether durch 40 g (1,1-Difluor-2,2-difluor-ethyl)-1,1,1-trifluorethylether ($CHF_2$-$CF_2$-O-$CH_2$-$CF_3$) ersetzt.

Beispiel 6

15 g eines Polyethers aus Ethylendiamin und gleichen Anteilen von Ethylenoxid und Propylenoxid der OH-Zahl 630 wurden mit 45 g Sorbitol/Glycerin/Propylenoxid-Polyether der OH-Zahl 560, 20 g Glycerin/Propylenoxid-Polyether der OH-Zahl 160, 20 g Tetrabromphthalat-Diol der OH-Zahl 220 und 20 g Trichlorethylphosphat sowie 1,0 g Schaumstabilisator, 1,0 g Dimethylcyclohexylamin, 2,2 g Wasser, 13 g (1,1-Difluor-2,2-difluor-ethyl)-ethylether ($CHF_2$-$CF_2$-O-$CH_2$-$CH_3$) und 137 g MDI wie in Beispiel 1 vermischt und verschäumt.

Beispiel 7

Es wurde verfahren wie im Beispiel 4, aber die 28 g 1-Hydrotetrafluorethyl-methylether durch 35 g (1,1,1-Trifluor-2-fluor-3,3-difluor-propyl)-methylether ($CF_3$-CHF-$CF_2$-O-$CH_3$) ersetzt.

**Tabelle:**

| | Mol-Verhältnis Wasser/fluorierter Ether | Eigenschaften des Schaumstoffs Rohdichte ($kg/m^3$) | Wärmeleitfähigkeit (23 °C, mW/(m·K)) nach 1 Tag | nach 6 Wochen |
|---|---|---|---|---|
| Vergleichsbeispiel | 100/0 | 37 | 25,8 | 34,7 |
| Beispiel 1 | 49/51 | 36 | 23,0 | 26,4 |
| Beispiel 2 | 75/25 | 37 | 22,8 | 26,4 |
| Beispiel 3 | 86/14 | 34 | 23,9 | 29,0 |
| Beispiel 4 | 21/79 | 32 | 22,1 | 23,8 |
| Beispiel 5 | 22/78 | 26 | 21,0 | 21,9 |
| Beispiel 6 | 58/42 | 32 | 23,1 | 26,3 |
| Beispiel 7 | 22/78 | 35 | 21,3 | 22,1 |

**Ansprüche**

1. Verfahren zur Herstellung von Schaumstoffen auf Basis von Polyisocyanaten durch Umsetzung von Polyisocyanaten, Verbindungen mit mindestens zwei gegenüber Isocyanatgruppen reaktionsfähigen Wasserstoffatomen. Treibmitteln und gegebenenfalls weiteren Zusatzmitteln, dadurch gekennzeichnet, daß man ein Treibmittel verwendet, das zu mindestens 10 Mol-% aus einem oder mehreren fluorierten Ethern der allgemeinen Formel I

$$C_aH_bF_c - O - C_dH_eF_f \qquad \text{mit}$$

| | |
|---|---|
| a = 1-6 | d = 1-2 |
| b = 1-12 | e = 0-5 |
| c = 1-12 | f = 0-5 |

besteht.

2. Verfahren nach Anspruch 1, dadurch gekennzeichnet, daß man ein Treibmittel verwendet, das zu mindestens 20 Mol-% aus einem oder mehreren der genannten fluorierten Ether besteht.

3. Verfahren nach Anspruch 1, dadurch gekennzeichnet, daß man ein Treibmittel verwendet, das zu 50-80 Mol-% aus einem oder mehreren der genannten fluorierten Ether besteht.

4. Verfahren nach einem der Ansprüche 1 bis 3, dadurch gekennzeichnet, daß der Rest des Treibmittels zumindest teilweise aus $CO_2$ besteht, welches durch Zusatz von Wasser bei der Umsetzung der Polyisocyanate gebildet wird.

5. Verfahren nach einem der Ansprüche 1 bis 3, dadurch gekennzeichnet, daß der Rest des Treibmittels aus $CO_2$ besteht, welches durch Zusatz von Wasser bei der Umsetzung der Polyisocyanate gebildet wird.

6. Verfahren nach einem der Ansprüche 1 bis 5, dadurch gekennzeichnet, daß man einen oder mehrere fluorierte Ether der Formel I mit

| | | |
|---|---|---|
| a = 1-5 | d = 1-2 | |
| b = 1-6 | e = 1-3 | |
| c = 5-10 | f = 2-4 | einsetzt. |

7. Verfahren nach einem der Ansprüche 1 bis 5, dadurch gekennzeichnet, daß man einen oder mehrere fluorierte Ether der Formel I mit

| | | |
|---|---|---|
| a = 1-3 | d = 1-2 | |
| b = 1-4 | e = 1-3 | |
| c = 1-6 | f = 2-4 | einsetzt. |